Europäisches Patentamt

European Patent Office

Office européen des brevets

(19)

(11) Publication number : **0 427 417 B1**

## (12) EUROPEAN PATENT SPECIFICATION

(45) Date of publication of patent specification :
02.03.94 Bulletin 94/09

(51) Int. Cl.⁵ : **B60C 11/01, B60C 11/00**

(21) Application number : **90311564.0**

(22) Date of filing : **22.10.90**

(54) **Tread of heavy-duty pneumatic radial tire.**

(30) Priority : **23.10.89 JP 275595/89**
**10.08.90 JP 212448/90**

(43) Date of publication of application :
**15.05.91 Bulletin 91/20**

(45) Publication of the grant of the patent :
**02.03.94 Bulletin 94/09**

(84) Designated Contracting States :
**DE ES FR GB LU**

(56) References cited :
**EP-A- 0 209 125**
**EP-A- 0 256 247**
**EP-A- 0 280 847**
**EP-A- 0 285 695**

(73) Proprietor : **Bridgestone Corporation**
**1-1, Kyobashi 1-Chome Chuo-Ku**
**Tokyo 104 (JP)**

(72) Inventor : **Aoki, Yasutoshi**
**3-5-8, Ogawa-higashi-cho**
**Kodaira-shi, Tokyo (JP)**
Inventor : **Enoki, Yasutaka**
**4-17-405, 259-1 Kami-hirose**
**Sayama-shi, Saitama-ken (JP)**

(74) Representative : **Whalley, Kevin et al**
**MARKS & CLERK 57/60 Lincoln's Inn Fields**
**London WC2A 3LS (GB)**

## Description

The present invention relates to a tread of a heavy-duty pneumatic radial tire and, more particularly, to a tread of a heavy-duty pneumatic radial tire wherein a pair of upper and lower rubber layers having mutually different moduli of elasticity are laminated.

In a conventionally known tread of a heavy-duty pneumatic radial tire, a pair of upper and lower rubber layers having mutually different moduli of elasticity are laminated.

A known example of this two-layer laminated structure is arranged such that a wear-resistant rubber layer is disposed as the upper layer on the tread surface side, and a heat-resistant rubber layer is disposed as the lower layer. Through this arrangement, an attempt is made to make the wear resistance and heat resistance compatible.

At the same time, when compared with bias tires, heavy-duty pneumatic radial tires excel in durability and wear resistance, but are more likely to be subjected to irregular wear, including shoulder wear in which shoulder portions of the tread are worn earlier than other portions and railway wear in which portions in the proximity of main grooves are worn earlier along the main grooves than other portions. In addition, when the tires run on ruts formed in a road surface, there is a drawback in that a steering wheel tends to be controlled by the wheels, that is the so-called wandering characteristic is poor. Accordingly, in order to overcome these drawbacks encountered with heavy-duty pneumatic radial tires, various improvements on tread patterns have been proposed such as US-A-3,411,559, 4,200,134, 4,214,618, and 4,480,671, and JP-A-2,169305. All of the tread patterns disclosed therein have a common feature in that they are provided with fine grooves extending in the circumferential direction of the tire.

However, with these treads having fine grooves extending in the circumferential direction so as to overcome the irregular wear and improve the wandering characteristic, etc., there have been cases where cracks occur from the bottom of the fine groove. Accordingly, the present inventors have investigated the cause of these cracks, and found that they are liable to occur particularly in treads comprising a pair of upper and lower rubber layers having mutually different moduli of elasticity.

EP-A-0209125 discloses a heavy-duty pneumatic radial tire according to the preamble of claim 1, having a tread comprising a pair of upper and lower rubber layers having mutually different moduli of elasticity, wherein the upper rubber layer of the tread is located on the tread surface side.

EP-A-0280847 discloses a heavy-duty pneumatic tire wherein a narrow-width circumferential groove extends along the circumferential direction of the tire in each of the shoulder portions of the tread surface.

Accordingly, the present invention has been devised in view of the above-described circumstances and aims to provide a tread of a heavy-duty pneumatic radial tire capable of simultaneously satisfying the antinomic properties of wear resistance and heat resistance due to being laminated with a pair of upper and lower rubber layers having mutually different moduli of elasticity.

Another aim of the present invention is to provide a tread of a heavy-duty pneumatic radial tire capable of sufficiently maintaining the effect of fine grooves that extend in the circumferential direction of the tire so as to mitigate irregular wear peculiar to the heavy-duty pneumatic radial tire and improve the wandering characteristic peculiar thereto.

In accordance with the present invention, there is provided a tread of a heavy-duty pneumatic radial tire, comprising a first rubber layer and a second rubber layer having mutually different moduli of elasticity, wherein said first rubber layer constitutes an outermost layer, as viewed in the radial direction of said tire, preferably including a tread surface and a shoulder, characterized in that said first rubber layer is provided with a narrow-width fine groove extending along the circumferential direction of said tire, the radius of curvature of the bottom of said fine groove being 1.5 mm or less, and in that the shortest distance between said bottom of said fine groove and a boundary surface bordering said first rubber layer and said second rubber layer is set to be 1 mm or more.

In cases where the tread of a heavy-duty pneumatic radial tire wherein a pair of upper and lower rubber layers having mutually different moduli of elasticity are laminated is used, deforming stress is concentrated in a boundary surface bordering the two rubber layers as the tire rolls normally or rides on a kerbstone. Furthermore, if such a tread is provided with a fine groove extending in the upper layer along the circumferential direction of the tire with the radius of curvature of the bottom of the fine groove being 1.5 mm or less, the deforming stress concentrated in the boundary surface affects the bottom of the fine groove, causing cracks to occur from the groove bottom. Accordingly, in the present invention, since the shortest distance between the groove bottom and the boundary surface is set to be 1 mm or more, the concentration of stress at the groove bottom is mitigated, thereby controlling the occurrence of cracks from the groove bottom.

By virtue of this arrangement, in accordance with the tread of the invention, it is possible to simultaneously satisfy, for instance, the antinomic properties of wear resistance and heat resistance due to being laminated with the pair of upper and lower rubber layers having mutually different moduli of elasticity. Furthermore, it is possible to sufficiently maintain the effect of the fine grooves that extend in the circumferential direction of the tire so as to mitigate irregular wear peculiar to the heavy-duty pneumatic radial tire and improve the wandering characteristic peculiar thereto.

In addition, in accordance with one preferred aspect of the invention, one fine groove is provided within a range of 3 - 10% of the tread width, the range extending from a tread end.

In accordance with another preferred aspect of the invention, the tread of a heavy-duty pneumatic radial tire further comprises a plurality of main grooves extending in the said first rubber layer , along the circumferential direction of the tire, the fine groove being provided along a land portion disposed in the proximity of a groove wall of each of the main grooves, and an independent land area being formed between each of the main grooves and the fine groove associated therewith.

In still another preferred aspect of the invention, the tire of a heavy-duty pneumatic radial tire further comprises a plurality of main grooves extending in the said first rubber layer, along the circumferential direction of the tire, a pair of fine grooves being provided in a land portion defined by adjacent ones of the main grooves, and an independent land area being formed between the pair of fine grooves.

The invention will be further described, by way of example only, with reference to the accompanying drawings, in which:

Fig. 1 is an enlarged cross-sectional view taken along the axial direction of a tire, illustrating the structure of a tread portion of a heavy-duty pneumatic radial tire in accordance with a first embodiment of the present invention;

Fig. 2 is an enlarged cross-sectional view taken along the axial direction of the tire, illustrating the structure of a tread portion of a heavy-duty pneumatic radial tire in accordance with a second embodiment of the present invention; and

Figs. 3 - 5 are enlarged cross-sectional views taken along the axial direction of the tire, illustrating structures of a tread portion of a heavy-duty pneumatic radial tire in accordance with other embodiments of the present invention.

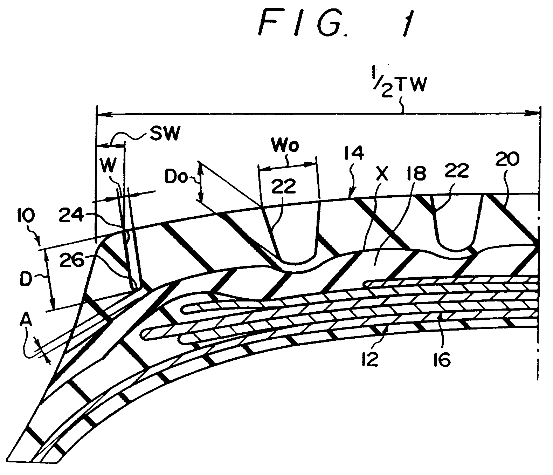

Fig. 1 illustrates a tire 10 in accordance with a first embodiment of the present invention. The size of the tire 10 is "285/75R24.5".

The tire 10 comprises a carcass 12 constituted by a rubberized cord layer and has a so-called radial structure in which its cord angle is formed substantially 90° with respect to the circumferential direction of the tire.

A tread portion 14 has a sufficient thickness to withstand wear and external damage. Plural belt layers 16 are interposed between the carcass 12 and the tread portion 14. Each of the belt layers 16 is constituted by multiple cords which are parallel with each other and have fixed angles with respect to the equatorial plane of the tire. At least two of these belt layers 16 are disposed in such a manner that their cord angles intersect each other.

The tread portion 14 is formed of two rubber layers 18, 20. The lower rubber layer 18 has a heat-resistant property. Meanwhile, the upper rubber layer 20 on the tread surface side has a wear-resistant property. In this embodiment, the rubber layer 18 has a modulus of 300% elasticity at room temperature of 150 kg/cm$^2$, and the rubber layer 20 has a modulus of 300% elasticity at room temperature of 100 kg/cm$^2$.

The proportions of the upper and lower layers in the entire tread, respectively vary depending on characteristics required for the heavy-load tire to which the tread is applied. However, the proportion of the lower layer in the entire tread is preferably 30 - 50%. The reason for this is that if said proportion exceeds 50%, wear resistance deteriorates, and if it is lower than 30%, the heat resistance is adversely affected.

A predetermined tread pattern is formed on the tread portion 14. This tread pattern employs a rib pattern in which four main grooves 22 are formed in such a manner as to be continuous in the circumferential direction of the tire.

A small-width groove (fine groove) 24 is formed on each shoulder side located axially outwardly of each axially outermost one of the main grooves 22. It should be noted that, as used herein and in the claims, the terms "axial" and "axially" refer to directions which are parallel to the axis of rotation of the tire. These small-width grooves 24 are also formed in such a manner as to be continuous in the circumferential direction of the tire. A width SW ranging from a shoulder-side inner wall surface of the fine groove 24 to a road-surface contacting end of the shoulder portion of the tire 10 is set to be within 3 - 10% (in this embodiment, SW = 8 mm) of a ground-contacting total width TW of the tire 10 (in this embodiment, TW = 220 mm). In addition, a width W of the fine groove 24 (in this embodiment, W = 2.5 mm) is set to be 15 - 30% of a width $W_0$ of the main groove 22 (in this embodiment $W_0$ = 14 mm). Namely,

$$0.15W_0 \leqq W \leqq 0.30W_0 \quad (1)$$

In addition, a depth D of the fine groove 24 (in this embodiment, D = 15.2 mm) is set to be equal to or smaller than a depth $D_0$ of the main groove 22 and equal to or greater than 60% thereof (in this embodiment

$D_0 = 15.2$ mm). Namely,

$$D_0 \geqq D \geqq 0.60D_0 \quad (2)$$

In addition, a radius of curvature R of a bottom of the fine groove 24 is set to be not more than 1.5 mm.

The reason for restricting the depth of the fine groove 24 to the aforementioned range is that if it is less than $0.60D_0$, it is impossible to expect a sufficient effect of the aforementioned fine grooves 24.

An interval A between the bottom 26 of the fine groove 24 and a boundary surface X bordering the two types of rubber layers 18, 20 of the tread portion in accordance with this embodiment is set to be 2 mm. This interval A is 1 mm or more, as a result of which the occurrence of cracks from the bottom 26 of the fine groove 24 is controlled.

It should be noted that the configuration of each of the fine grooves 24 may be rectilinear, zigzag, or wavy along the circumferential direction of the tire. In addition, a plurality of fine grooves may be provided on each shoulder side of the tire.

A description will now be given of the operation of this embodiment.

As the tire 10 rolls, heat is generated therein. However, since heat-resistant rubber is used for the lower rubber layer 18 of the tread portion 14, heat separation durability can be maintained. If the heat-resistant rubber is used up to the ground contacting surface of the tire 10, the heat-resistant rubber is inferior in wear resistance.

In the tire 10 of this embodiment, since the wear-resistant rubber layer 20 is laminated as the upper layer of the tread portion 14, heat resistance can be maintained, and the wear resistance of the tread portion 14 can be improved. In addition, in this embodiment, since the fine grooves 24 are provided in the proximity of the respective shoulder portions along the circumferential direction of the tire, the irregular wear occurring at the shoulder portions can be made to concentrate in a land portion located axially outwardly of the fine groove 24, thereby preventing the irregular wear from reaching a center portion of the tread portion.

In addition, deforming stress is concentrated at the boundary surface X bordering the two types of rubber layers 18, 20 of the tread portion as the tire rolls normally and rides on a kerbstone. Accordingly, if the distance between the boundary surface X and the bottom 26 of the fine groove 24 is short, cracks occur in the bottom 26 owing to the effect of the concentration of the stress. For this reason, it is preferable to space the boundary surface from the bottom 26 of the fine groove 24 as far apart as possible, so that, in this embodiment, the interval A between the bottom 26 of the fine groove 24 and the boundary surface X bordering the rubber layers 18, 20 of the tread portion 14 is set to be 2 mm. Consequently, the deforming stress acting in the bottom 26 of the fine groove 24 can be reduced, thereby virtually preventing the occurrence of cracks in the bottom 26.

The following table shows the results of a kerbstone riding-on test using an actual vehicle, in which the length of cracks occurring in the circumferential groove bottom with respect to varying intervals A between the bottom 26 of the fine groove 24 and the boundary surface X was averaged, and a comparison was made between a prior art example and this embodiment.

| Interval A | Average length of cracks in the circumferential groove bottom |
|---|---|
| 0.5 mm (prior art) | 4.0 mm |
| 1.0 mm | 1.5 mm |
| 2.0 mm | 0 mm |
| 3.0 mm | 0 mm |

As shown in the table, if the aforementioned interval is set to 1 mm or more, it is possible to substantially overcome the occurrence of cracks. In the case of normal running, even if the interval is 1 mm, no problem is presented. In particular, if the interval is set to 2 mm or more, the occurrence of cracks can be suppressed. It should be noted that in cases where the interval exceeds 3 mm, no cracks occur in the bottom 26 of the groove 24, but in this case it becomes necessary to increase the thickness of the upper rubber layer 20 in order to secure the depth of the fine groove 24. Hence, in view of other aspects of durability including heat resistance, 2 mm is preferable as the interval.

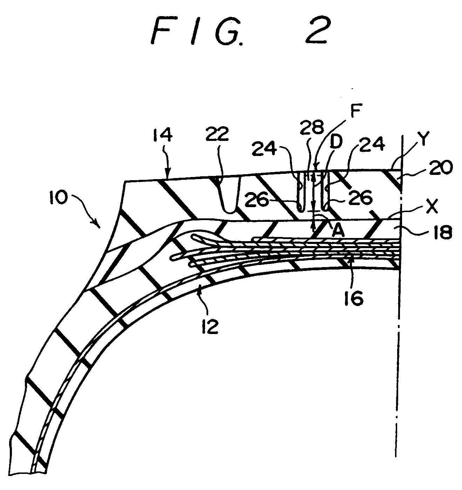

Referring now to Fig. 2, a description will be given of a second embodiment of the present invention.

It should be noted that those components and portions that are identical to those of the first embodiment are denoted by the same reference numerals, and a description thereof will be omitted.

As shown in Fig. 2, in this embodiment, an independent land area 28 defined by a pair of fine grooves 24 is provided on the equatorial plane side of the tread portion 14. In addition, the dimension A between the bottom 26 of the fine groove 24 and the boundary surface X bordering the two types of rubber layers 18, 20 of the tread portion 14 in accordance with this embodiment is set to be 2 mm in the same way as the first embodiment.

Accordingly, in this embodiment, since the dimension A between the bottom 26 of the fine groove 24 and the boundary surface X bordering the two types of rubber layers 18, 20 is set to be 2 mm, the deforming stress acting in the bottom 26 of the fine groove 24 can be reduced, thereby virtually preventing the occurrence of cracks in the groove bottom 26. In addition, as the tire rolls under a load, a negative shearing force is produced in the independent land area 28, and the independent land area 28 is consequently worn, undergoing irregular wear which would otherwise occur in the tread portion 14. As a result, the effect of controlling irregular wear can be maintained.

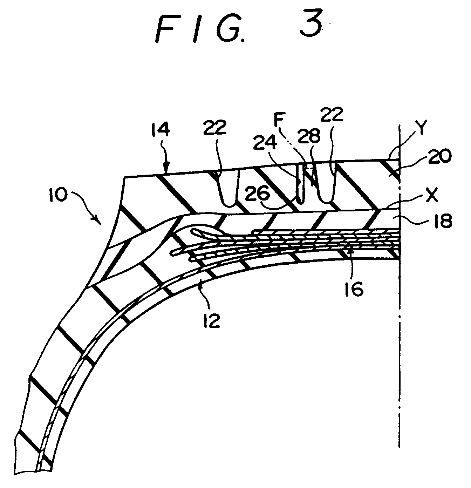

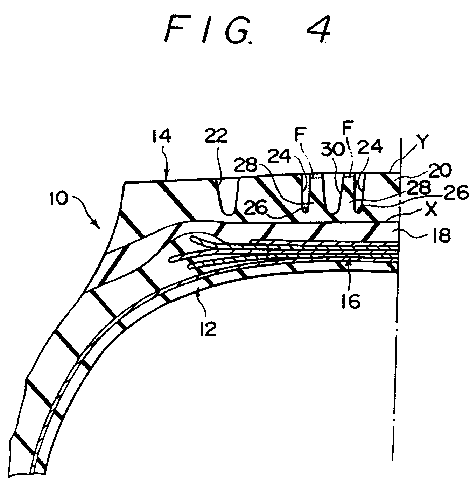

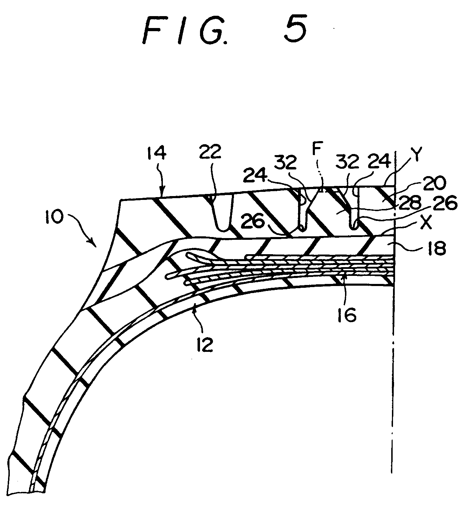

As shown in Fig. 3, the independent land area 28 may be defined by the fine groove 24 and the main groove 22, or, as shown in Fig. 4, a groove 30 may be formed in a central portion of the independent land area 28 in such a manner as to be continuous in the circumferential direction of the tire. Furthermore, as shown in Fig. 5, a taper 32 may be provided in an upper portion of a side wall portion 28A of the independent land area 28. Moreover, although not shown, multiple sipes may be provided transversely in the independent land area 28. Alternatively, as shown by a two-dotted chain line F in Figs. 2 - 5, the independent land area 28 may be stepped down relative to a cross-sectional contour line Y of the tread portion 14. Thus, by providing sipes or a stepped-down configuration, the negative shearing force resulting from the rolling of the tire becomes large, thereby making it possible to enhance the effect of controlling irregular wear.

As described above, the tread of a heavy-duty pneumatic radial tire offers an outstanding advantage in that it is possible to sufficiently maintain the effect of the fine grooves that extend in the circumferential direction of the tire so as to mitigate irregular wear peculiar to the heavy-duty pneumatic radial tire and improve the wandering characteristic peculiar thereto. Simultaneously the tire satisfies, for instance, the antinomic properties of wear resistance and heat resistance due to being laminated with the pair of upper and lower rubber layers having mutually different moduli of elasticity.

## Claims

1. A tread (14) of a heavy-duty pneumatic radial tire (10), comprising a first rubber layer (20) and a second rubber layer (18) having mutually different moduli of elasticity, wherein said first rubber layer constitutes an outermost layer, as viewed in the radial direction of said tire, characterized in that said first rubber layer is provided with a narrow-width fine groove (24) extending along the circumferential direction of said tire, the radius of curvature of the bottom (26) of said fine groove being 1.5 mm or less, and in that the shortest distance (A) between said bottom (26) of said fine groove and a boundary surface (X) bordering said first rubber layer and said second rubber layer is set to be 1 mm or more.

2. A tread of a heavy-duty pneumatic radial tire as claimed in claim 1, characterized in that one said fine groove is provided within a range (SW) of 3 - 10% of the tread width (TW), said range extending from a tread end.

3. A tread of a heavy-duty pneumatic radial tire as claimed in claim 1, characterized by further comprising a plurality of main grooves (22) extending in said first rubber layer (20) along the circumferential direction of said tire, said fine groove (24) being provided along a land portion disposed in the proximity of a groove wall of each of said main grooves, and an independent land area (28) formed between each of said main grooves and said fine groove associated therewith.

4. A tread of a heavy-duty pneumatic radial tire as claimed in claim 1, characterized by further comprising a plurality of main grooves (22) extending in said first rubber layer (20) along the circumferential direction of said tire, a pair of fine grooves (24) provided in a land portion defined by adjacent ones of said main grooves, and an independent land area (28) formed between said pair of fine grooves.

5. A tread of a heavy-duty pneumatic radial tire as claimed in claim 3 or 4, characterized in that said independent land area (28) is stepped down relative to a cross-sectional contour line (Y) of the tread surface.

6. A tread of a heavy-duty pneumatic radial tire as claimed in any of claims 3 to 5, characterized in that the width (W) of said fine groove (24) is in a range of not less than 15% and not more than 30% of the width ($W_o$) of said main groove (22).

7. A tread of a heavy-duty pneumatic radial tire as claimed in any of claims 3 to 6, characterized in that the depth (D) of said fine groove (24) is equal to or smaller than the depth ($D_o$) of said main groove (22) and equal to or greater than 60% thereof.

8. A tread of a heavy-duty pneumatic radial tire as claimed in any of claims 1 to 7, characterized in that said first rubber layer (20) includes a shoulder portion of said tread.

**Patentansprüche**

1. Lauffläche (14) eines Hochleistungs-Radialluftreifens (10) mit einer ersten Gummilage (20) und einer zweiten Gummilage (18), die ihrerseits voneinander abweichende Elastizitätsmodule haben, wobei die erste Gummilage die, in radialer Richtung des Reifens gesehen, äußerste Lage darstellt,
dadurch **gekennzeichnet**, daß die erste Gummilage (20) mit einer schmalen Nut (24) versehen ist, die sich längs der Umfangsrichtung des Reifens erstreckt, wobei der Krümmungsradius des Bodens (26) der schmalen Nut 1,5 mm oder weniger ist und dadurch, daß der kürzeste Abstand (A) zwischen dem Boden (26) der schmalen Nut und der Grenzschicht (X) zwischen der ersten und der zweiten Gummilage so festgesetzt ist, daß er 1 mm oder mehr beträgt.

2. Lauffläche eines Hochleistungs-Radialluftreifens nach Anspruch 1, dadurch gekennzeichnet, daß eine schmale Nut innerhalb eines Bereiches (SW) von 3 bis 10% der Profilbreite (TW) vorgesehen ist, wobei sich dieser Bereich von einer Seitenschulter des Profils aus erstreckt.

3. Lauffläche eines Hochleistungs-Radialluftreifens nach Anspruch 1, dadurch gekennzeichnet, daß er weiterhin mehrere Nuten aufweist, die sich in der ersten Gummilage (20) längs der Umfangsrichtung des Reifens erstrecken, wobei die schmale Nut (24) längs eines Stegabschnittes angeordnet ist, der in der Nähe einer Nutwand von jeder der Hauptnuten angeordnet ist und wobei zwischen jeder Hauptnut und der dieser zugeordneten schmalen Nut ein unabhängiger Stegebereich (28) ausgeformt ist.

4. Lauffläche eines Hochleistungs-Radialluftreifens nach Anspruch 1, dadurch gekennzeichnet, daß sie weiterhin mehrere Hauptnuten (22) umfaßt, die sich in der ersten Gummilage (20) längs der Umfangsrichtung des Reifens erstrecken sowie ein Paar von schmalen Nuten (24), die in einem Stegabschnitt angeordnet sind, der durch einander benachbarte Hauptnuten gebildet wird und schließlich einen unabhängigen Stegbereich (28), der zwischen dem Paar von schmalen Nuten ausgebildet ist.

5. Lauffläche eines Hochleistungs-Radialluftreifens nach einem der Ansprüche 3 oder 4, dadurch gekennzeichnet, daß der unabhängige Stegbereich (28) relativ zur Querschnitts-Umfangslinie (Y) der Lauffläche nach unten abgestuft ist.

6. Lauffläche eines Hochleistungs-Radialluftreifens nach einem der Ansprüche 3 bis 5, dadurch gekennzeichnet, daß die Breite (W) der schmalen Nut (24) innerhalb eines Bereiches von nicht weniger als 15% und nicht mehr als 30% der Breite ($W_O$) der Hauptnut (22) liegt.

7. Lauffläche eines Hochleistungs-Radialluftreifens nach einem der Ansprüche 3 bis 6, dadurch gekennzeichnet, daß die Tiefe (D) der schmalen Nut (24) gleich oder kleiner ist als die Tiefe ($D_O$) der Hauptnut (22) und gleich oder größer als 60% davon.

8. Lauffläche eines Hochleistungs-Radialluftreifens nach einem der Ansprüche 1 bis 7, dadurch gekennzeichnet, daß die erste Gummilage (20) einen Schulterabschnitt der Lauffläche einschließt.

**Revendications**

1. Bande de roulement (14) de pneumatique (10) à carcasse radiale pour charges élevées, comprenant une première couche de caoutchouc (20) et une seconde couche de caoutchouc (18) ayant des modules d'élasticité différents, dans laquelle la première couche de caoutchouc constitue une couche externe, dans la direction radiale du pneumatique, caractérisée en ce que la première couche de caoutchouc a une fine gorge (24) de faible largeur s'étendant dans la direction circonférentielle du pneumatique, les rayons de courbure du fond (26) de la fine gorge étant inférieurs ou égaux à 1,5 mm, et en ce que la plus courte distance (A) comprise entre le fond (26) de la fine gorge et une surface limite (X) de bord de la première couche de caoutchouc et de la seconde couche de caoutchouc est réglée à une valeur au moins égale à 1 mm.

2. Bande de roulement de pneumatique à carcasse radiale pour charges élevées selon la revendication 1, caractérisé en ce qu'une fine gorge est disposée dans une plage (SW) comprise entre 3 et 10 % de la largeur (TW) de la bande de roulement, cette plage s'étendant à partir d'une extrémité de la bande de roulement.

3. Bande de roulement de pneumatique à carcasse radiale pour charges élevées selon la revendication 1, caractérisée en ce qu'elle comprend en outre plusieurs gorges principales (22) s'étendant dans la première couche de caoutchouc suivant la direction circonférentielle du pneumatique, la fine gorge (24) étant disposée le long d'une partie de portée placée à proximité d'une paroi de chacune des gorges principales, et une zone indépendante (28) de portée formée entre chacune des gorges principale et la fine gorge associée.

4. Bande de roulement de pneumatique à carcasse radiale pour charges élevées selon la revendication 1, caractérisée en ce qu'elle comprend en outre plusieurs gorges principales (22) s'étendant dans la première couche de caoutchouc (20) suivant la direction circonférentielle du pneumatique, une paire de fines gorges (24) formées dans une partie de portée délimitée par des gorges principales adjacentes, et une zone indépendante (28) de portée formée entre les deux fines gorges.

5. Bande de roulement de pneumatique à carcasse radiale pour charges élevées selon la revendication 3 ou 4, caractérisée en ce que la zone indépendante (28) de portée a un niveau inférieur à celui de la ligne de profil en coupe (Y) de la surface de la bande de roulement.

6. Bande de roulement de pneumatique à carcasse radiale pour charges élevées selon l'une des revendications 3 à 5, caractérisée en ce que la largeur (W) de la fine gorge (24) est comprise entre des valeurs qui ne sont ni inférieures à 15 % ni supérieures à 30 % de la largeur ($W_o$) de la gorge principale (22).

7. Bande de roulement de pneumatique à carcasse radiale pour charges élevées selon l'une des revendications 3 à 6, caractérisée en ce que la profondeur (D) de la fine gorge (24) est égale ou inférieure à la profondeur ($D_o$) de la gorge principale (22) et est égale ou supérieure à 60 % de cette profondeur.

8. Bande de roulement de pneumatique à carcasse radiale pour charges élevées selon l'une quelconque des revendications 1 à 7, caractérisée en ce que la première couche de caoutchouc (20) comprend une partie d'épaulement de la bande de roulement.

F I G. 1

# F I G. 2

# F I G. 3

# F I G. 4

# F I G.  5